# EUROPEAN PATENT APPLICATION

(11) **EP 2 368 855 A2**
(43) Date of publication of application: **28.09.2011**
(21) Application number: 11153994.6
(22) Date of filing: 10.02.2011
(51) Int. Cl.: C03B 29/08

(54) **Apparatus for heating glass sheets for tempering**

(30) Priority: 15.03.2010 FI 20105257
(71) Applicant: Glaston Services Ltd. Oy, 33730 Tampere (FI)
(72) Inventor: Anttonen, Kalevi, 33900 Tampere (FI); Keto, Kyösti, 37470 Vesilahti (FI)
(74) Representative: LEITZINGER OY

(57) **Abstract**

An apparatus for heating glass sheets for tempering. The apparatus comprises: a heating furnace (1) having a longitudinal direction and a lateral direction, a conveyor (2) in the furnace for carrying glass sheets (G) in the longitudinal furnace direction, and means (3-8) for circulating and heating convection air. These means include nozzle enclosures (6) provided with jet orifices (9) for blasting heated convection air towards the conveyor. The nozzle enclosures (6) lengthwise of the furnace are disposed at an acute angle relative to the glass traveling direction. The angle is at least 2 degrees, preferably 2-10 degrees, most preferably about 3-5 degrees.

## Description

The present invention relates to an apparatus for heating glass sheets for tempering, said apparatus comprising:
- a heating furnace having a longitudinal direction and a lateral direction
- a conveyor in the furnace for carrying glass sheets in the longitudinal furnace direction
- means for circulating and heating convection air, said means comprising nozzle enclosures provided with jet orifices for blasting heated convection air towards the conveyor.

There are prior known apparatuses of this type for heating glass sheets in preparation of tempering, wherein the air overlying a glass sheet is circulated in a space to be heated. Air is drawn in by fans inside the space from a top section of the furnace, followed by pressurizing and blowing the air further into nozzle enclosures set above the glass sheet. Inside the nozzle enclosures are open resistors, the air being blown across these and further through nozzle covers to a top surface of the glass. This is preceded, however, by blowing the air into an air duct, the position of which, with respect to the glass sheet, is above the nozzle enclosures. Between the air duct and the nozzle enclosure is a perforated plate capable of equalizing pressure differences before the air reaches the nozzle enclosure, in which the open resistor is also located.

In currently available equipment, the nozzle enclosures are positioned in an almost longitudinal direction relative to the glass direction and at a distance of about 120 mm from each other. The jet orifices present in the nozzle deck are about 10 mm in diameter. In each nozzle deck, the orifices are typically arranged in three rows. Each row of orifices is spaced from the next one. The nozzle enclosure, including its open resistor, is about 2 meters in length. A problem with the foregoing type of equipment is anisotropy which occurs at the tempering stage. Anisotropy is a phenomenon, in which, prior to quenching (the glass temperature being 600-630°C), the glass has excessive temperature differences or the quenching produces temperature differences in the glass. In tempered glass, such a phenomenon is most easily observable e.g. in automotive rear window in the weather which is sunny, yet the sun is setting. This is when the rear window displays typically circular marks which are sometimes quite regular indeed. Such marks are the result of quenching.

The phenomenon appears also whenever e.g. heat streaks are left on the glass by heating (resulting from the distance between adjacent rows of orifices), which then become visible during the quenching process or, at worst, accentuate even more the nozzle jet marks inflicted by quenching.

It is an object of the present invention to reduce substantially or at least to minimize the foregoing problem with tempering furnaces. In other words, an object of the invention is to reduce in tempered glass the occurrence of anisotropy taking place during the course of tempering.

The above-mentioned object of the invention is attained according to the present invention in such a way that the nozzle enclosures lengthwise of the furnace are disposed at an acute angle relative to the glass traveling direction, said angle being at least 2 degrees, preferably 2-10 degrees, most preferably about 3-5 degrees.

The apparatus according to the invention enables avoiding the development of temperature differences in those parts of glass to be tempered which exist between nozzle enclosures or whose positions coincide with areas between the jet orifices of the nozzle enclosures, which are disposed in lengthwise rows. In other words, a result of diverting the nozzle enclosures is that there will be a presence of jet orifices in a cross-apparatus direction also at locations in which such orifices have thus far been non-existent. Consequently, the glass sheet heats up more consistently, which reduces the foregoing drawbacks.

Preferred embodiments of the present invention are presented in the dependent claims.

The invention will now be described more precisely with reference to the accompanying drawings, in which:
- Fig. 1: shows an apparatus according to one preferred embodiment of the invention in a side view,
- fig. 2: shows an apparatus according to the figure from the direction of an arrow 2 depicted in fig. 1, and
- fig. 3: shows nozzle enclosures and nozzle frames according to the embodiment of fig. 1 in a view from below.

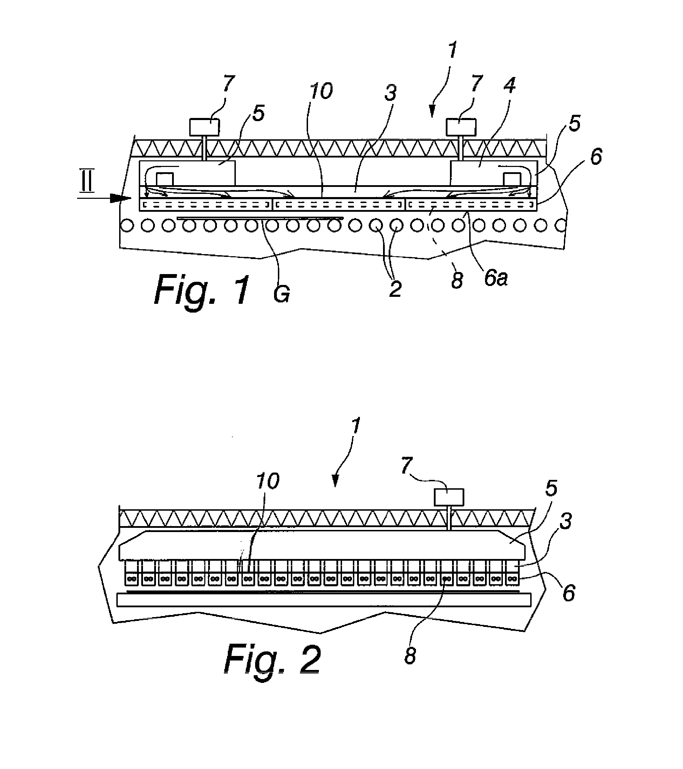

Hence, figs. 1 and 2 depict an apparatus of the invention for heating glass sheets in preparation of tempering. The apparatus comprises a heating furnace, indicated with reference numeral 1. The heating furnace 1 has a longitudinal direction and a lateral direction. The heating furnace is provided with a conveyor 2, comprising e.g. rolls 2, which is capable of carrying glass sheets G in the longitudinal furnace direction.

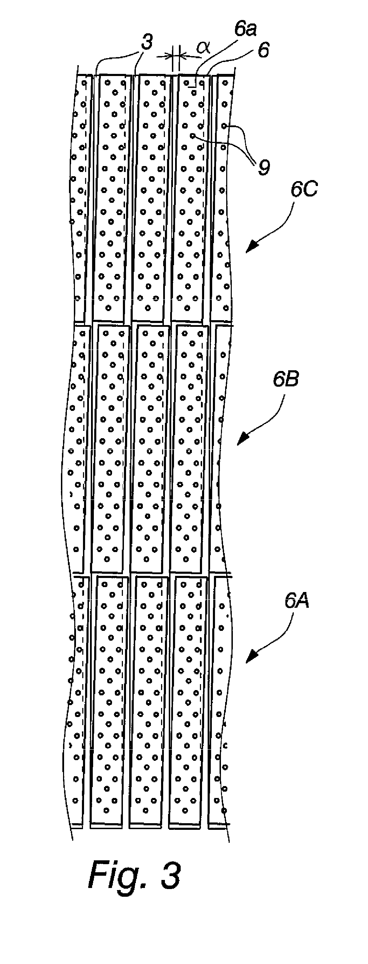

Above the conveyor, preferably a short distance therefrom, e.g. 2-10 cm, preferably about 4 cm therefrom, are disposed nozzle enclosures 6, whose downward facing side, a so-called nozzle deck 6a, is formed with jet orifices 9 (see also fig. 3) for blasting heated convection air towards the conveyor, and specifically towards a glass sheet G carried on the conveyor.

In order to circulate the convection air blasted to the glass sheet G, the heating furnace 1 is provided with means 3-8. Such means for setting convection air in circulation include air ducts 3 above each nozzle enclosure 6 and in communication with the nozzle enclosures 6 by way of perforated plates 10. The air ducts 3 are in connection with transverse cross-furnace distribution channels 5, which are fitted with an air circulation fan 4 present inside the furnace. A drive motor 7 for the air circulation fan 4 is disposed outside the furnace 1.

The nozzle enclosures 6 are provided with open resistors 8, across which the air delivered into the nozzle enclosure 6 finds its way further through the jet orifices 9 towards the rolls 2 and the glass sheet G.

From fig. 3 can be seen an apparatus of the invention in one preferred embodiment. In fig. 3 are seen in a view from below the nozzle enclosures 6 and the air ducts 3 disposed thereabove. Here, each nozzle enclosure 6 is divided into successive enclosure segments 6A, 6B and 6C and each of these successive enclosure segments 6A, 6B, 6C is set at an acute angle α with respect to the glass traveling direction, resulting in a staggered configuration despite the fact that the enclosure segments are in alignment with each other in terms of the glass traveling direction. The above-mentioned angle α is preferably 2-10 degrees, most preferably about 3-5 degrees. It should be noted that it is not absolutely necessary to divide the nozzle enclosure 6 into enclosure segments, but it can be diverted to the above-mentioned angle α also as an undivided unit. In this case, however, the demand of space for the nozzle enclosures 6 increases in a lateral direction of the furnace 1 as compared to the embodiment of fig. 3. It is obvious that by shortening the enclosure segmentation length, the angle can be broadened, even up to more than 10 degrees. Between diagonally directed enclosure segments can be present rectilinear enclosure segments or the directions of various enclosure segments may divert on either side of the traveling direction.

In an apparatus of the invention, the jet orifices 9 are disposed relative to a glass sheet in such positions that the hot air blasted onto the glass sheet G becomes more evenly distributed over the surface of the glass sheet 6 and the above-mentioned problems shall be substantially eliminated or at least mitigated.

The present invention is not limited to just to the presented embodiment, but it finds a multitude of applications within the scope of protection defined by the claims.

## Claims

1. An apparatus for heating glass sheets for tempering, said apparatus comprising:
- a heating furnace (1) having a longitudinal direction and a lateral direction
- a conveyor (2) in the furnace for carrying glass sheets (G) in the longitudinal furnace direction
- means (3-8) for circulating and heating convection air, said means including nozzle enclosures (6) provided with jet orifices (9) for blasting heated convection air towards the conveyor, **characterized in that** the nozzle enclosures (6) lengthwise of the furnace are disposed at an acute angle relative to the glass traveling direction, said angle being at least 2 degrees, preferably 2-10 degrees, most preferably about 3-5 degrees.

2. An apparatus as set forth in claim 1, **characterized in that** the nozzle enclosures (6) are divided into successive enclosure segments (6A, 6B, 6C), each of which is individually disposed in a staggered fashion at said small angle relative to the glass traveling direction.

3. An apparatus as set forth in claim 1-2, **characterized in that** convection air heating elements (8) are located in the nozzle enclosures (6).

4. An apparatus as set forth in claim 1-3, **characterized in that** the means for setting convection air in circulation include air ducts (3) above each nozzle enclosure (6) and in communication with the nozzle enclosures (6) by way of perforated plates (10).

5. An apparatus as set forth in claim 1-4, **characterized in that** the air ducts (3) are in connection with transverse cross-furnace distribution channels (5), which are fitted with an air circulation fan (4) present inside the furnace (1).
